# EUROPÄISCHE PATENTSCHRIFT

(11) **EP 3 679 466 B1**
(45) Veröffentlichungstag und Bekanntmachung des Hinweises auf die Patenterteilung: **11.10.2023**
(21) Anmeldenummer: 18737255.2
(22) Anmeldetag: 04.07.2018
(51) Int. Cl.: G06F 3/12, B41J 3/407

(54) **DIREKTDRUCKVERFAHREN UND DIREKTDRUCKMASCHINE ZUR BEDRUCKUNG VON BEHÄLTERN MIT EINEM DIREKTDRUCK**
DIRECT PRINTING METHOD AND DIRECT PRINTING MACHINE FOR PRINTING CONTAINERS WITH A DIRECT PRINT
PROCÉDÉ D'IMPRESSION DIRECTE ET MACHINE D'IMPRESSION DIRECTE POUR L'IMPRESSION DE RÉCIPIENTS PAR IMPRESSION DIRECTE

(30) Priorität: 04.09.2017 DE 102017215429
(43) Veröffentlichungstag der Anmeldung: 15.07.2020
(73) Patentinhaber: Krones AG, 93073 Neutraubling (DE)
(72) Erfinder: LAUTERBACH, Florian, 93073 Neutraubling (DE); DOMEIER, Bernhard, 93073 Neutraubling (DE); FAESSLER, Florian, 93073 Neutraubling (DE); SONNAUER, Andreas, 93073 Neutraubling (DE)
(74) Vertreter: Grünecker Patent- und Rechtsanwälte PartG mbB
(86) Internationale Anmeldenummer: PCT/EP2018/068070
(87) Internationale Veröffentlichungsnummer: WO 2019/042632

(56) Entgegenhaltungen:
- EP-B1- 2 591 917
- DE-A1-102015 114 172
- US-A1- 2005 285 919
- US-A1- 2005 285 919
- US-A1- 2015 138 295
- US-A1- 2015 138 295

## Beschreibung

Die Erfindung betrifft ein Direktdruckverfahren und eine Direktdruckmaschine zur Bedruckung von Behältern mit einem Direktdruck.

Bisher wurden Behälter oftmals mittels einer Etikettiermaschine mit vorbedruckten Etiketten versehen, die den Inhalt kennzeichnen und/oder bewerben. In letzter Zeit werden dafür jedoch vermehrt Direktdruckverfahren eingesetzt, bei denen die Behälter von Druckstationen direkt mittels Direktdruckköpfen bedruckt werden. Vorteilhaft dabei ist, dass der Direktdruck besonders einfach auf Basis einer elektronischen Druckgrafikvorlage angepasst werden kann, wobei es sogar möglich ist, die Behälter individuell zu bedrucken.

Üblicherweise werden die Behälter mit derartigen Direktdruckverfahren bzw. -maschinen in Behälteraufnahmen eines Transporteurs, beispielsweise eines Karussells, aufgenommen und entlang einer Transportbahn zu einer oder mehreren Druckstationen mit wenigstens einem Direktdruckkopf transportiert. Während des Druckvorgangs wird der Behälter vom Transporteur angehalten oder weitertransportiert und optional durch seine Behälteraufnahme geschwenkt. Währenddessen wird ein Druckbereich auf der Behälteroberfläche mit dem wenigstens einen Direktdruckkopf flächig bedruckt. Dabei werden von dem wenigstens einen Direktdruckkopf, beispielsweise nach dem Tintenstrahldruckverfahren, einzelne Tintentropfen aus aktiven Druckdüsen auf den Druckbereich abgegeben, so dass im Zusammenwirken mit der Transport- und/oder Schwenkbewegung ein flächiger Direktdruck entsteht. Für einen mehrfarbigen Direktdruck wird der Behälter auf diese Weise zu mehreren Druckstationen transportiert und dort mit unterschiedlichen Farben bedruckt.

Allerdings werden auch Behälter mit einer von der kreisrunden Form abweichenden Oberflächengeometrie mit derartigen Direktdruckverfahren bzw. -maschinen bedruckt, beispielsweise Formbehälter. Dabei können durch den Druckprozess und die Oberflächentopologie des Behälters Abbildungsfehler entstehen, welche die Qualität der Bedruckung maßgeblich verschlechtern können.

Folglich kann es zu Verzerrungen durch zur Tropfenflugrichtung des Direktdruckkopfs schräge und/oder gekrümmte Behälterbereiche kommen. Beim Druck auf einfache Oberflächentopologien sind zwar Korrekturmethoden der Verzerrung bekannt, allerdings sind sie aufgrund der dafür notwendigen hohen Rechenleistung bisher in der Auflösung beschränkt, so dass ein Direktdruck auf Behältern nicht zufriedenstellend korrigiert werden kann.

Darüber hinaus sind mikroskopische Korrekturen bekannt, bei denen Variationen der Flugzeit der aus einem Direktdruckkopf ausgestoßenen Tintentropfen kompensiert werden. Allerdings können damit Abbildungsfehler bei komplexen Oberflächentopologien nicht ausreichend korrigiert werden.

Beispielsweise ist aus der EP 2 591 917 B1 ein Verfahren bekannt, bei dem die Ausstoßzeitpunkte der Tintentropfen eingestellt werden, indem Bildpunkte eines zugehörigen Druckmotivs auf einer Druckvorlage in der oder entgegen die Bewegungsrichtung verschoben werden und wenigstens eine Düsenreihe eines Druckkopfs auf Grundlage der verschobenen Bildpunkte angesteuert wird.

Die DE 10 2015 114 172 A1 offenbart ein Verfahren und ein System zur Bedruckung von Behältern, wobei Druckmetadaten mit Informationen hinsichtlich der Geometrie eines zu bedruckenden Behälters bereitgestellt werden, wobei erste Druckinformationen mit Daten eines am Behälter anzubringenden Druckbildes bereitgestellt werden, wobei Kodierungsdaten mit beispielweise in steganografisch kodierter Form anzubringenden Informationen bereitgestellt werden, und wobei kodierte Druckbildinformationen durch Veränderung der ersten Druckbildinformationen basierend auf den Kodierungsdaten erzeugt werden und der Behälter basierend auf den kodierten Druckbildinformationen im Direktdruckverfahren bedruckt wird. Dabei wird ein örtlicher Bereich an dem die Kodierungsdaten in dem Druckbild bzw. am Behälter angeordnet werden basierend auf den Druckmetadaten ausgewählt.

Aufgabe der vorliegenden Erfindung ist es also, ein Direktdruckverfahren und eine Direktdruckmaschine zur Bedruckung von Behältern mit einem Direktdruck bereitzustellen, bei denen die Qualität der Bedruckung von Behältern mit komplexer Oberflächentopologie bei einer Verminderung von manuellen Schritten verbessert ist.

Zur Lösung dieser Aufgabenstellung stellt die Erfindung ein Direktdruckverfahren mit den Merkmalen des Anspruchs 1 bereit. Vorteilhafte Ausführungsformen der Erfindung sind in den Unteransprüchen genannt.

Dadurch, dass aus den 3D-Daten des Behälters, der Druckbewegungsbahn der Direktdruckmaschine und aus den Druckparametern der Direktdruckmaschine das 3D-Druckmodell erstellt wird, kann die Abbildung der zu druckenden Druckgrafikvorlage auf die Behälter vorhergesagt werden. Folglich können mit dem 3D-Druckmodell sowohl die makroskopische Korrektur für den Ausgleich der Verzerrungen als auch die mikroskopische Korrektur für die Düsenkorrektur bestimmt werden.

Dadurch, dass die Druckgrafikvorlage mit der makroskopischen Korrektur korrigiert und in einer korrigierten Druckgrafik abgelegt wird, können die durch die komplexe Oberflächentopologie hervorgerufenen Verzerrungen bei hoher Auflösung invers verzerrt und so für den nachfolgenden Druck korrigiert werden. Da die makroskopische Korrektur vor der Erzeugung des Rasterbilds durchgeführt wird, müssen trotz hoher Auflösung keine störenden Effekte auf das Rasterbild berücksichtigt werden. Folglich kann die makroskopische Korrektur mit reduzierter Komplexität, also mit geringerer Rechenleistung durchgeführt werden.

Anschließend wird mit dem Rasterbildprozessor aus der korrigierten Druckgrafik das Druckrasterbild bestimmt und auf Basis der mikroskopischen Korrektur korrigiert. Es hat sich bei umfangreichen Untersuchungen herausgestellt, dass makroskopische Effekte bei der mikroskopischen Korrektur vernachlässigt werden können, ohne dass sich dies negativ auf die Qualität des Direktdrucks auswirkt. Dadurch, dass mit der mikroskopischen Korrektur direkt das Druckrasterbild korrigiert wird, können makroskopische Effekte vernachlässigt werden, so dass die gerasterten Druckpunkte nur noch mikroskopisch verschoben werden. Folglich kann so für die mikroskopische Korrektur ebenfalls Rechenzeit eingespart werden.

Mit dem erfindungsgemäßen Direktdruckverfahren zur Bedruckung von Behältern ist es daher möglich, die Qualität der Bedruckung von Behältern mit komplexer Oberflächentopologie zu verbessern und durch eine Standardisierung des Verfahrens die manuellen Eingriffe zu vermindern, ohne dadurch einen hohen Aufwand an Rechenzeit zu benötigen. Ferner kann dem Designer die korrigierte Druckgrafikvorlage mit zusätzlichen Topologieinformationen aus dem 3D-Druckmodell zur Verfügung gestellt werden, wodurch die Qualität noch weiter verbessert wird.

Das Direktdruckverfahren kann mit der Direktdruckmaschine zur Bedruckung von Behältern durchgeführt werden. Denkbar ist, dass das Direktdruckverfahren mit einem Computersystem der Direktdruckmaschine durchgeführt wird. Das Computersystem kann wenigstens teilweise in der Direktdruckmaschine als Maschinensteuerung angeordnet sein. Denkbar ist auch, dass ein Teil des Computersystems als davon räumlich abgesetzte Computereinheit ausgebildet ist. Beispielsweise können die Direktdruckmaschine mit der Maschinensteuerung in einer Getränkeverarbeitungsanlage und die davon räumlich abgesetzte Computereinheit bei einem Dienstleister angeordnet sein. Denkbar ist beispielsweise, dass der Hersteller der Direktdruckmaschine als Dienstleister aus der Druckgrafikvorlage das korrigierte Druckrasterbild erzeugt und per Internet an die Getränkeverarbeitungsanlage übermittelt, wo es dann auf die Behälter als Direktdruck gedruckt wird. Ebenso ist denkbar, dass das Direktdruckverfahren nur mit der Maschinensteuerung oder nur mit der abgesetzten Computereinheit durchgeführt wird.

Die Behälter können dazu vorgesehen sein, Getränke, Hygieneartikel, Pasten, chemische, biologische und/oder pharmazeutische Produkte aufzunehmen. Im Allgemeinen können die Behälter für jegliche fließfähige bzw. abfüllbare Medien vorgesehen sein. Die Behälter können aus Kunststoff, Glas oder Metall sein, aber auch hybride Behälter mit Materialmischungen sind denkbar. Die Kunststoffbehälter können aus PET, HD-PE oder PP sein. Zudem können die Behälter aus einem biologisch abbaubaren Material sein, beispielsweise Maisstärke. Mit Formbehälter sind Behälter gemeint, die von einer Rotationssymmetrie um eine Behälterlängsachse abweichen. Die Formbehälter können beispielsweise einen rechteckigen oder ovalen Querschnitt aufweisen. Denkbar ist, dass die Formbehälter eine Oberflächentopologie mit reliefartigen Oberflächenbereichen umfasst.

Bei dem Direktdruckverfahren werden die Behälter mit einem Transporteur zu wenigstens einer Druckstation mit jeweils wenigstens einem Direktdruckkopf transportiert. Der Transporteur kann ein Karussell oder ein Förderband umfassen. Bei dem Direktdruckverfahren können die Behälter mittels zugeordneter Behälteraufnahmen um Behälterlängsachsen gedreht werden, um über eine Schwenkbewegung ein flächiges Druckbild zu erzeugen. Bei dem Direktdruckverfahren können die Behälter mehreren Druckstationen mittels des Transporteurs zugeführt werden, wobei die Druckstationen jeweils einen oder mehrere Direktdruckköpfe umfassen.

Falls die Behälter mit mehreren Druckstationen bedruckt werden, kann dies bedeuten, dass die Druckstationen mit Drucktinten verschiedener Farben arbeiten, beispielsweise Weiß, Cyan, Magenta, Gelb und/oder Schwarz. Denkbar ist auch, dass eine der Druckstationen mit einer Sonderfarbe arbeitet.

Der wenigstens eine Direktdruckkopf kann mit einem Digital- bzw. Tintenstrahldruckverfahren arbeiten, bei dem die Drucktinte mittels Druckdüsen an die Behälter abgegeben wird. "Tintenstrahldruckverfahren" kann hier bedeuten, dass in Kammern der Druckdüsen ein plötzlicher Druckanstieg über Piezo- oder Thermoelemente erzeugt wird, so dass eine kleine Menge an Tinte durch die Druckdüsen gedrückt und als Tintentropfen an die Behälter abgegeben wird. Jede Druckdüse kann dazu ausgebildet sein, einen oder mehrere Druckpunkte jeweils auf einem Behälter zu erzeugen. Der Direktdruckkopf kann eine Düsenplatte umfassen, die wenigstens eine Düsenreihe mit den Druckdüsen aufweist. Eine Düsenreihe kann eine Anzahl von Druckdüsen in einem Bereich von 100 - 10000, insbesondere in einem Bereich von 250 - 1024 aufweisen. Ebenfalls ist denkbar, dass die Düsenplatte mehrerer parallel zueinander angeordnete Düsenreihen (beispielsweise 1 - 8) aufweist.

Mit Druckgrafikvorlage kann hier eine Datei mit einer zweidimensionalen Grafik, einem Text und/oder einem Barcode gemeint sein, die mit der Direktdruckmaschine als der Direktdruck auf die Behälter gedruckt werden soll. Die Druckgrafikvorlage kann eine Grafikdatei sein, beispielsweise im Format JPEG, PDF und dergleichen.

Mit "3D-Daten des Behälters" ist hier ein digitaler Datensatz gemeint, mit dem eine Geometrie eines zu bedruckenden Behälters beschrieben wird. Die 3D-Daten der Behälter können 3D-Punkte, 3D-Kurven und/oder 3D-Flächen umfassen. Denkbar ist, dass die 3D-Daten eine Vielzahl von Schnittkurven umfasst, die jeweils das Profil eines zu bedruckenden Behälters in regelmäßigen oder unregelmäßigen Abständen entlang einer Behälterlängsachse beschreibt. Beispielsweise können die 3D-Daten der Behälter als STEP, IGES, UAE, DAE oder XML-Datei vorliegen.

Die Druckbewegungsbahn der Direktdruckmaschine umfasst eine Relativbewegung zwischen einem zu bedruckenden Behälter und dem wenigstens einen Direktdruckkopf. Denkbar ist also, dass die Druckbewegungsbahn eine Bewegung des zu bedruckenden Behälters und/oder des wenigstens einen Direktdruckkopfs beim Bedrucken umfasst. Die Bewegung des zu bedruckenden Behälters kann eine Überlagerung von verschiedenen Bewegungen umfassen, beispielsweise des Transporteurs und einer daran angeordneten Behälteraufnahme, in die der zu bedruckende Behälter beim Bedrucken aufgenommen wird. Zudem kann auch der wenigstens eine Direktdruckkopf mit einer Verfahreinheit beim Bedrucken verfahren werden.

Mit Druckparametern kann hier beispielsweise eine Drucksequenz oder eine Druckauflösung der Direktdruckmaschine, insbesondere des wenigstens einen Direktdruckkopf gemeint sein. Ebenso kann damit eine Düsenkonfiguration des wenigstens einen Direktdruckkopfs gemeint sein, beispielsweise eine Anzahl von Düsenreihen, eine Anordnung der Düsenreihen an dem wenigstens einen Direktdruckkopf und/oder eine Anordnung von Düsen an einer Düsenplatte des wenigstens einen Direktdruckkopfs.

Mit den 3D-Daten des Behälters und der Druckbewegungsbahn kann dann zu jedem Druckzeitpunkt genau vorhergesagt werden, an welcher Stelle sich ein Druckbereich und/oder die Oberflächentopologie des zu bedruckenden Behälters gegenüber dem wenigstens einen Direktdrucckopfs befindet. Entsprechend kann dadurch vorhergesagt werden, wo die einzelnen Tintentropfen auf dem zu bedruckenden Behälter auftreffen und welches Druckbild des Direktdrucks sich daraus ergibt.

Mit der "Verzerrung der Druckgrafikvorlage auf den Behältern" kann hier die Abbildung der an sich zweidimensionalen Druckgrafikvorlage auf die Oberflächentopologie eines zu bedruckenden Behälters gemeint sein. Mit der inversen der Verzerrung kann hier eine Umkehrfunktion der Verzerrung gemeint sein. Anders ausgedrückt kann mit der inversen der Verzerrung die Druckgrafikvorlage so verzerrt werden, dass der Direktdruck auf den Behältern unverzerrt erscheint.

Mit "Düsenkorrektur" kann hier eine Veränderung der lokalen Auflösung durch einen gekrümmt, konisch und/oder zu den Düsen des wenigstens einen Direktdruckkopfs schräg verlaufender Oberflächenbereich des zu bedruckenden Behälters gemeint sein. Ebenso kann damit eine Korrektur der Flugzeit der individuellen Tintentropfen gemeint sein.

Dass die "Druckgrafikvorlage mit der makroskopischen Korrektur korrigiert und in der korrigierten Druckgrafik abgelegt wird" kann hier bedeuten, dass einzelne Bildpunkte und/oder Flächenbereiche der Druckgrafikvorlage gemäß der makroskopischen Korrektur verschoben bzw. verzerrt werden. Die korrigierte Druckgrafik kann eine Grafikdatei sein, beispielsweise im Format JPEG, PDF oder dergleichen.

Mit Rasterbildprozessor kann hier ein Verfahren gemeint sein, mit dem die korrigierte Druckgrafik in einzelne Druckpunkte gerastert wird. Dadurch wird die korrigierte Druckgrafik in ein Format übersetzt, dass sich unmittelbar zum Drucken mit der Direktdruckmaschine eignet. Beispielsweise kann die korrigierte Druckgrafik in ein regelmäßiges Raster von gleich großen oder unterschiedlich großen Druckpunkten übersetzt werden. Durch den Abstand der Druckpunkte wird die Farbdichte beeinflusst. Das Druckrasterbild kann eine Datendatei sein.

Dass "das Druckrasterbild auf Basis der mikroskopischen Korrektur korrigiert und als korrigiertes Druckrasterbild abgelegt wird", kann hier bedeuten, dass einzelne Druckpunkte des Druckrasterbilds mittels der mikroskopischen Korrektur lokal verschoben werden. Dadurch können lokale Auflösungsveränderungen durch zum wenigstens einen Direktdruckkopf schräge und/oder gekrümmt Oberflächenbereiche korrigiert werden.

Die makroskopische Korrektur kann dazu vorgesehen sein, eine durch eine Abbildung der Druckgrafikvorlage hervorgerufene Verzerrung und/oder eine Änderung der Farbdichte des Direktdrucks an den Behältern zu korrigieren. Dadurch wird beispielsweise eine durch die Oberflächentopologie der Behälter hervorgerufene Verzerrung eines Barcodes so kompensiert, dass der Barcode beim Betrachten des Direktdrucks wieder als rechtwinkliges Raster erscheint. Ebenso wird eine durch die Verzerrung hervorgerufene Änderung der Farbdichte dadurch kompensiert. Mit "Abbildung der Druckgrafikvorlage" kann hier eine Abbildungsfunktion der Druckgrafikvorlage auf einen zu bedruckenden Behälter beim Drucken als Direktdruck gemeint sein.

Die Düsenkorrektur kann eine Korrektur einer lokalen Druckauflösung umfassen, mit der Auflösungsveränderungen durch zu einer Tropfenflugrichtung des wenigstens einen Direktdruckkopfs schräg und/oder gekrümmt verlaufende Behälterbereiche berücksichtigt werden. Beispielsweise würden ohne die Korrektur der lokalen Druckauflösung bei einer konischen Form der Behälter quer zur Druckrichtung verlaufende Linien scheinbar doppelt als Geisterbild erscheinen. Dies kann besonders gut mittels der Korrektur der lokalen Druckauflösung kompensiert werden, indem die Position der Druckpunkte an die konische Form angeglichen wird. Mit Druckrichtung können hier eine oder mehrere Abgaberichtungen der Tintentropfen aus Düsen von dem wenigstens einen Direktdruckkopf gemeint sein.

Die Düsenkorrektur kann eine Flugzeitkorrektur der Drucktropfen umfassen, bei der individuelle Flugzeiten der Drucktropfen aus Düsen von dem wenigstens einen Direktdruckkopf berücksichtigt werden. Dadurch können lokale Veränderungen des Druckrasters besonders gut kompensiert werden, die durch unterschiedliche Flugzeiten der Drucktropfen hervorgerufen werden. Denkbar ist, dass dabei für jede Düse und zu jedem Zeitpunkt des Drucks ein Druckabstand zu dem zu bedruckenden Behälter berechnet und im Druckraster kompensiert wird.

Bei der Bestimmung des 3D-Druckmodells kann aus den 3D-Daten der Behälter eine Oberflächenkontur bestimmt werden, wobei aus der Druckbewegungsbahn der Direktdruckmaschine gegenüber der Oberflächenkontur und aus den Druckparametern der Direktdruckmaschine eine Abbildungsfunktion ermittelt wird, mit der Bildpunkte der Druckgrafikvorlage mit der Oberflächenkontur korreliert werden. Durch die Bestimmung der Oberflächenkontur werden die 3D-Daten der Behälter für das 3D-Druckmodell zunächst aufbereitetet. Durch die Druckbewegungsbahn und die Druckparameter sind die Kinematik der Direktdruckmaschine und der Aufbau der Druckdüsen des wenigstens einen Direktdruckkopfs definiert. Folglich kann aus diesen Informationen der Druckprozess simuliert und daraus die Abbildungsfunktion bestimmt werden, wie die Druckgrafikvorlage beim Druck tatsächlich auf dem dreidimensionalen Behälter zu liegen kommt. Aus der Abbildungsfunktion kann die Verzerrung der Druckgrafikvorlage auf den Behältern ermittelt werden.

Denkbar ist, dass aus dem 3D-Druckmodell ein mit der Druckgrafikvorlage korreliertes Höhenprofil erstellt wird. Über das Höhenprofil wird einem Designer ermöglicht, die 2D-Druckgrafikvorlage mit der Behältertopologie in Einklang zu bringen.

Bei der Bestimmung des 3D-Druckmodells aus den 3D-Daten der Behälter kann aus der Druckbewegungsbahn der Direktdruckmaschine eine die Oberflächenkontur wenigstens teilweise umschließende Referenzflächenkontur bestimmt wird, und wobei die Verzerrung der Druckgrafikvorlage auf den Behälter durch eine Projektion von der Referenzflächenkontur auf die Oberflächenkontur ermittelt wird. Dadurch kann eine Abbildungsfunktion der Druckgrafikvorlage auf die Oberflächentopologie der Behälter besonders einfach bestimmt werden. Beispielsweise kann die Druckgrafikvorlage auf die Referenzflächenkontur virtuell montiert werden und von dort auf die Oberflächenkontur projiziert werden, um die Verzerrung der Druckgrafikvorlage zu ermitteln. Die Referenzflächenkontur kann eine Fläche umfassen, die zwischen dem wenigstens einen Direktdruckkopf und dem zu bedruckenden Behälter angeordnet ist und die beim Durchlaufen der Druckbewegungsbahn einen konstanten Abstand zu dem wenigstens einen Direktdruckkopf aufweist. Die Oberflächenkontur kann eine 3D-Flächengeometrie sein, die wenigstens teilweise mit den 3D-Daten der Behälter zusammenfällt. Denkbar ist, dass die Oberflächenkontur lokale Abweichungen gegenüber den 3D-Daten der Behälter umfasst, um den Druck auf Behälterbereiche auszugleichen, auf die die Drucktropfen beim Druck flach auftreffen, beispielsweise in einem Winkel von weniger als 30°, vorzugsweise von weniger 10°.

Bei der Bestimmung der Oberflächenkontur können die 3D-Daten der Behälter durch einen räumlichen Glättungsfilter gefiltert und/oder auf die 3D-Daten der Behälter eine Einhüllfläche virtuell aufgeschrumpft werden. Dadurch können die zuvor beschriebenen Behälterbereiche besonders einfach ausgeglichen werden, auf die die Drucktropfen beim Druck flach auftreffen. Mit dem räumlichen Glättungsfilter kann hier beispielsweise ein Gaußfilter, ein Medianfilter oder dergleichen gemeint sein. Mit "Aufschrumpfen" kann hier gemeint sein, dass eine konvexe Hülle an die 3D-Daten der Behälter von außen angenähert wird.

Denkbar ist, dass Oberflächenabstände und/oder Oberflächengeschwindigkeiten der Oberflächenkontur oder der 3D-Daten der Behälter gegenüber dem wenigstens einen Direktdruckkopf bestimmt werden, insbesondere wobei die Druckbewegungsbahn der Direktdruckmaschine berücksichtigt wird, um beim Drucken eine virtuelle Bewegung der Oberflächenkontur gegenüber dem wenigstens einen Direktdruckkopf zu bestimmen. Mittels der Oberflächengeschwindigkeiten kann die Flugzeitkorrektur der Drucktropfen bestimmt werden. Folglich kann die Flugzeitkorrektur für jeden Druckpunkt besonders genau bestimmt werden.

Denkbar ist auch, dass mit den Oberflächengeschwindigkeiten Variationen der Oberflächenabstände korrigiert werden. Dadurch ist es möglich, durch die Oberflächentopologie bedingte Variationen der Flugzeiten in eine entsprechende Änderung der Oberflächengeschwindigkeit umzurechnen. Folglich ist die Korrektur der Flugzeiten besonders einfach.

Darüber hinaus stellt Erfindung mit dem Anspruch 12 zur Lösung der Aufgabenstellung ein Computerprogrammprodukt mit von einem Computersystem ausführbaren Maschineninstruktionen bereit, die beim Ausführen das Computersystem dazu veranlassen, das Direktdruckverfahren nach einem der Ansprüche 1-11 durchzuführen. Das Computerprogrammprodukt kann ausführbare Maschineninstruktionen umfassen, die beim Ausführen das Computersystem dazu veranlassen, die zuvor beschriebenen Verfahrensschritte des Direktdruckverfahrens einzeln oder in beliebigen Kombinationen durchzuführen.

Ferner stellt die Erfindung mit dem Anspruch 13 zur Lösung der Aufgabenstellung eine Direktdruckmaschine zur Bedruckung von Behältern mit einem Direktdruck bereit.

Dadurch, dass das Computersystem dazu ausgebildet ist, das Direktdruckverfahren nach einem der Ansprüche 1-11 durchzuführen,
- wird aus den 3D-Daten des Behälters, der Druckbewegungsbahn der Direktdruckmaschine und aus den Druckparametern der Direktdruckmaschine das 3D-Druckmodell erstellt. Damit kann die Abbildung der zu druckenden Druckgrafikvorlage auf die Behälter vorhergesagt werden;
- werden mit dem 3D-Druckmodell sowohl die makroskopische Korrektur für den Ausgleich der Verzerrungen als auch die mikroskopische Korrektur für die Düsenkorrektur bestimmt;
- wird die Druckgrafikvorlage mit der makroskopischen Korrektur korrigiert und in einer korrigierten Druckgrafik abgelegt. Dadurch können die durch die komplexe Oberflächentopologie hervorgerufenen Verzerrungen bei hoher Auflösung invers verzerrt und so für den nachfolgenden Druck korrigiert werden. Da die makroskopische Korrektur vor der Erzeugung des Rasterbilds durchgeführt wird, müssen trotz hoher Auflösung keine störenden Effekte auf das Rasterbild berücksichtigt werden. Folglich kann die makroskopische Korrektur mit reduzierter Komplexität, also mit geringerer Rechenleistung durchgeführt werden; und
- wird mit dem Rasterbildprozessor aus der korrigierten Druckgrafik das Druckrasterbild bestimmt und auf Basis der mikroskopischen Korrektur korrigiert. Es hat sich bei umfangreichen Untersuchungen herausgestellt, dass makroskopische Effekte bei der mikroskopischen Korrektur vernachlässigt werden können, ohne dass sich dies negativ auf die Qualität des Direktdrucks auswirkt. Dadurch, dass mit der mikroskopischen Korrektur direkt das Druckrasterbild korrigiert wird, arbeitet sie bei einer gegenüber der Druckgrafikvorlage reduzierten Auflösung. Folglich kann so für die mikroskopische Korrektur ebenfalls Rechenzeit eingespart werden.

Mit der erfindungsgemäßen Direktdruckmaschine zur Bedruckung von Behältern ist es daher möglich, die Qualität der Bedruckung von Behältern mit komplexer Oberflächentopologie zu verbessern, ohne dadurch einen hohen Aufwand an Rechenzeit zu benötigen.

Die Direktdruckmaschine zur Bedruckung von Behältern kann die zuvor in Bezug auf das Direktdruckverfahren beschriebenen Merkmale einzelnen oder in beliebigen Kombinationen sinngemäß umfassen. Vorzugsweise kann das Computersystem der Direktdruckmaschine dazu ausgebildet sein, die zuvor beschriebenen Verfahrensschritte einzelnen oder in beliebigen Kombinationen durchzuführen.

Der Transporteur kann als Lineartransporteur oder als Karussell ausgebildet sein. Insbesondere kann der Transporteur Behälteraufnahmen umfassen, um die Behälter darin beim Bedrucken aufzunehmen. Die Behälteraufnahmen können einen Drehteller und/oder einen Zentrierkopf umfassen, um die Behälter beim Bedrucken gegenüber dem wenigstens einen Direktdruckkopf um eine Achse zu schwenken. Dadurch ist es einerseits möglich, die Behälter flächig zu bedrucken und andererseits einen Druckabstand in Abhängigkeit von der Oberflächentopologie zu verändern.

Das Computersystem kann eine Computereinheit und/oder eine Maschinensteuerung der Direktdruckmaschine umfassen. Denkbar ist, dass das Computersystem nur die Computereinheit oder nur die Maschinensteuerung umfasst. Die Computereinheit kann von den übrigen Komponenten der Direktdruckmaschine abgesetzt angeordnet sein, beispielsweise bei einem Dienstleister zur Bereitstellung des korrigierten Druckrasterbildes, der Druckgrafikvorlage und/oder der korrigierten Druckgrafik. Die Computereinheit kann über ein Computernetzwerk mit der Maschinensteuerung der Direktdruckmaschine verbunden sein, beispielsweise über ein lokales Netzwerk und/oder über das Internet.

Die Computereinheit und/oder die Maschinensteuerung können jeweils eine Prozessoreinheit, eine Speichereinheit, eine Eingabeeinheit und/oder eine Ausgabeeinheit umfassen. Beispielsweise kann die Computereinheit ein handelsüblicher PC sein.

Die Maschinensteuerung kann dazu ausgebildet sein, die Druckstationen mit dem wenigstens einen Direktdruckkopf und/oder den Transporteur zum Transport der Behälter zu steuern.

Weitere Merkmale und Vorteile der Erfindung werden nachfolgend anhand der in den Figuren dargestellten Ausführungsbeispiele näher erläutert. Dabei zeigt:
- Figur 1: eine Übersichtsdarstellung eines erfindungsgemäßen Ausführungsbeispiels einer Direktdruckmaschine zur Bedruckung von Behältern mit einem Direktdruck als Draufsicht;
- Figuren 2A-2B: ein erfindungsgemäßes Ausführungsbeispiel eines Direktdruckverfahrens für eine Direktdruckmaschine zur Bedruckung von Behältern mit einem Direktdruck als Flussdiagramm;
- Figuren 3A-3B: beispielhafte Durchführung der Verfahrensschritte zur Erstellung des 3-D-Druckmodells anhand eines Formbehälters;
- Figuren 4A-4D: beispielhafte Durchführung der Verfahrensschritte zur makroskopischen Korrektur der Druckgrafikvorlage; und
- Figuren 5A-5B: beispielhafte Durchführung der Verfahrensschritte zur Korrektur der lokalen Druckauflösung; und
- Figur 6: beispielhafte Durchführung der Verfahrensschritte zur Flugzeitkorrektur der Drucktropfen.

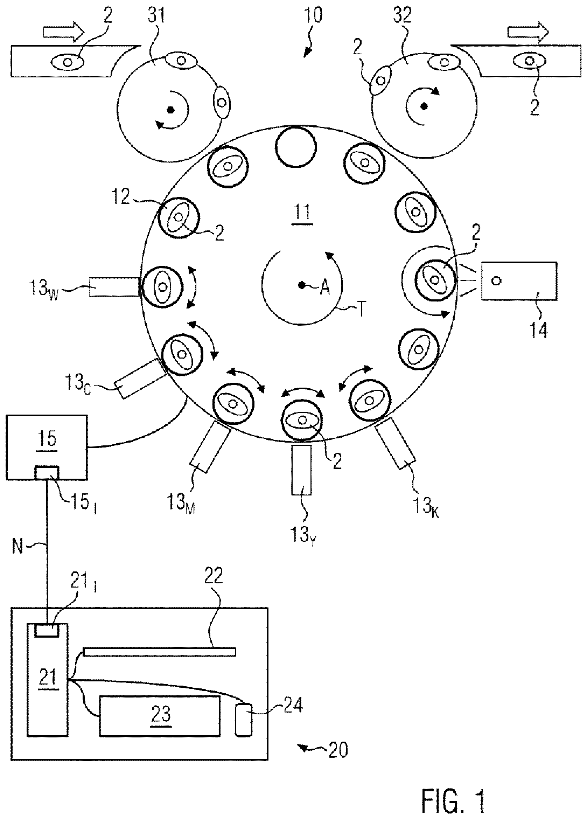

In der Figur 1 ist eine Übersicht eines erfindungsgemäßen Ausführungsbeispiels einer Direktdruckmaschine 10 zur Bedruckung von Behältern 2 in einer Draufsicht dargestellt. Zu sehen ist, dass die Behälter 2 hier als Formbehälter ausgebildet sind und, beispielsweise von einem Füller und einem Verschließer kommend, mit dem Zulaufstern 31 an den Transporteur 11 übergeben und dort in den Behälteraufnahmen 12 aufgenommen werden. Derart aufgenommen werden sie vom Transporteur 11 an den daran angegliederten Direktdruckstationen 13_{w}, 13_{c}, 13_{M}, 13_{Y}, 13_{K} vorbeitransportiert und mit unterschiedlichen Farben mittels nicht genauer dargestellter Direktdruckköpfe bedruckt, hier beispielsweise entsprechend der Indizes mit Weiß, Cyan, Magenta, Gelb und Schwarz. Die Direktdruckköpfe arbeiten nach einem Digital- bzw. Tintenstrahldruckverfahren. Dadurch entsteht auf den Behältern 2 ein mehrfarbiger Direktdruck. Denkbar ist auch, dass weitere Direktdruckstationen vorhanden sind, um die Behälter 2 anschließend auf der Rückseite zu bedrucken. Nachfolgend wird der auf den Behältern 2 aufgebrachte Direktdruck mit der Aushärtestation 14 ausgehärtet und dadurch dauerhaft fixiert, beispielsweise mittels UV-Licht. Die fertig bedruckten Behälter 2 werden dann an den Ablaufstern 32 übergeben und zu nachfolgenden Behandlungsstationen weitergeleitet, beispielsweise zu einer Verpackungsmaschine.

Der Transporteur 11 ist beispielhaft als Karussell ausgebildet, das sich in der Transportrichtung T um die vertikale Achse A dreht, denkbar ist jedoch auch ein Lineartransporteur. Die an dem Transporteur 11 angeordneten Behälteraufnahmen 12 umfassen jeweils einen Drehteller und eine Zentrierglocke (nicht genauer dargestellt), so dass die Behälter 2 beim Druckvorgang gegenüber der jeweiligen Direktdruckstation 13_{W}, 13_{C}, 13_{M}, 13_{Y}, 13_{K} um ihre Längsachsen geschwenkt werden können. Dadurch werden die Behälter 2 bei der Vorbeifahrt so geschwenkt, dass der Druckabstand abhängig von der Oberflächentopographie möglichst konstant bzw. innerhalb geeigneter Schranken bleibt. Die geeigneten Schranken ergeben sich üblicherweise aus einem Datenblatt, aus dem hervorgeht, in welchem Druckabstand die Direktdruckköpfe jeweils eine ausreichende Qualität liefern.

Folglich ergibt sich durch die Drehung des Transporteurs 11 um die Achse A und das schwenken mit den Behälteraufnahmen 12 eine Druckbewegungsbahn gegenüber den Druckstationen 13_{W}, 13_{C}, 13_{M}, 13_{Y}, 13_{K} bzw. gegenüber den dort angeordneten Direktdruckköpfen, so dass auf den Behältern 2 ein flächiger Direktdruck aufgedruckt wird.

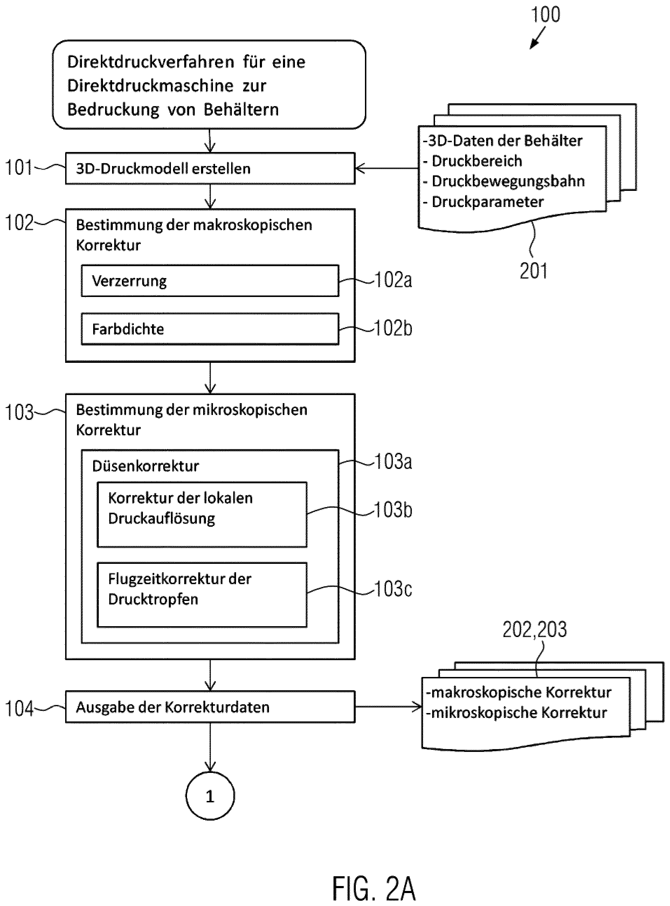

Des Weiteren ist das Computersystem 20 mit der Computereinheit 21 und der Maschinensteuerung 15 zu sehen. Das Computersystem 20 ist dazu ausgebildet, das nachfolgend in Bezug auf die Figuren 2A - 2B beschriebene Direktdruckverfahren 100 oder das zuvor beschriebene Direktdruckverfahren, insbesondere nach einem der Ansprüche 1-11 durchzuführen.

Die Computereinheit 21 ist ein handelsüblicher PC-Computer mit einer Tastatur 23 und einer Computermaus 24 als Eingabeeinheit, einem Bildschirm 22 als Ausgabeeinheit und mit einer digitalen Datenschnittstelle 21_{I} zur Verbindung mit der Maschinensteuerung 15 über das Datennetzwerk N. Auf der Computereinheit 21 werden die Erstellung des 3D-Druckmodells, sowie die makroskopische Korrektur, der Rasterbildprozessor und die mikroskopische Korrektur durchgeführt (siehe nachfolgende Verfahrensschritte 101-108). Anschließend wird das korrigierte Druckrasterbild 207 an die Maschinensteuerung 15 über das Datennetzwerk N übergeben und gedruckt.

Ferner ist die Maschinensteuerung 15 zu sehen, mit der die Direktdruckmaschine 10 über hier nicht dargestellte Steuerleitungen gesteuert wird. Die Maschinensteuerung 15 ist mit der Schnittstelle 15_{I} mit dem Datennetzwerk N verbunden und dazu ausgebildet, das von der Computereinheit 21 korrigierte Druckrasterbild in elektronische Steuersignale derart umzuwandeln, dass darauf basierend der Transporteur 11, die Behälteraufnahmen 12 und die Druckstationen 13w, 13c, 13_{M}, 13_{Y}, 13_{K} so gesteuert werden, dass die Behälter 2 mit dem korrigierten Druckrasterbild als Direktdruck bedruckt werden.

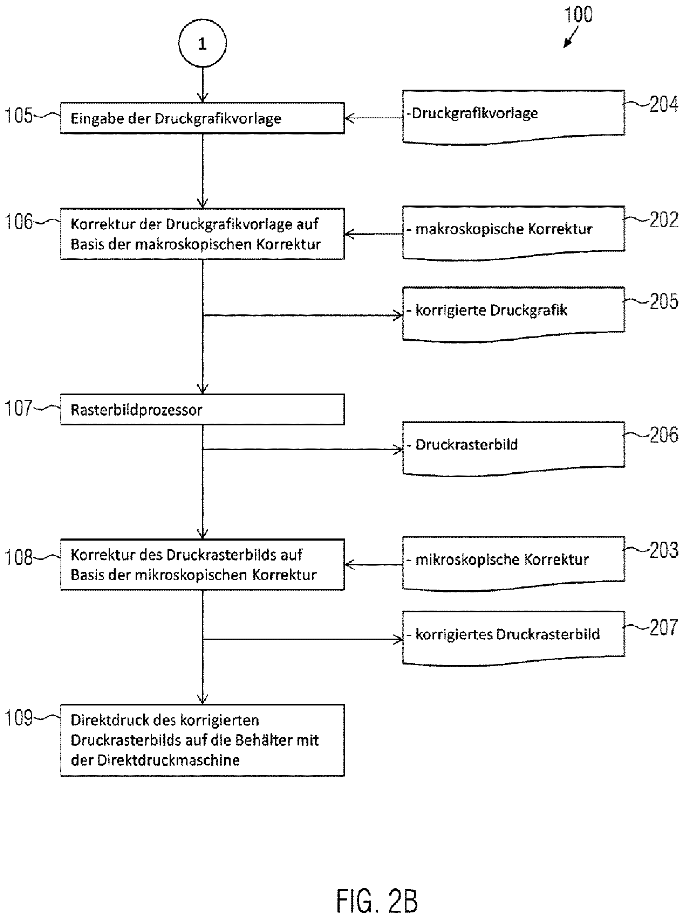

In der Figur 2 ist ein erfindungsgemäßes Ausführungsbeispiel des Direktdruckverfahrens 100 für eine Direktdruckmaschine 10 (beispielsweise die aus der Figur 1) zur Bedruckung von Behältern 2 mit einem Direktdruck als Flussdiagramm dargestellt.

Zu sehen ist, dass die 3D-Daten der Behälter 2, der Druckbereich für den Direktdruck, die Druckbewegungsbahn und die Druckparameter der Direktdruckmaschine als Dateien 201 bereitgestellt werden.

Die 3D-Daten der Behälter 2 sind hier als 3D-Punkte bereitgestellt, mit denen die Oberflächentopologie des entsprechenden Behältertyps bzw. eines zu bedruckenden Behälters geometrisch beschrieben wird. Denkbar ist auch, dass die 3D-Daten Linien- und/oder Flächenelemente umfassen.

Der Druckbereich der Behälter 2 beschreibt den Teil der Oberflächentopologie, der für die Bedruckung mit dem Direktdruck vorgesehen ist. Dieser kann beispielsweise durch mit den entsprechenden 3D-Punkten der 3D-Daten verknüpfte Attribute gekennzeichnet werden.

Die Druckbewegungsbahn umfasst für die Direktdruckköpfe jeweils eine Relativbewegung zwischen einem zu bedruckenden Behälter 2 und dem Direktdruckkopf. In der Relativbewegung ist auch die Orientierung des Direktdruckkopfs zu dem zu bedruckenden Behälter 2 enthalten.

Ferner umfassen die Druckparameter noch Druckfrequenzen für die Direktdruckköpfe, die angeben, mit welcher Frequenz die Direktdruckköpfe die Drucktropfen ausstoßen können. Des Weiteren umfassen die Druckparameter den genauen Aufbau der Düsenreihen, also auch den Abstand der Druckdüsen relativ zu einem Koordinatensystem des jeweiligen Direktdruckkopfs. Darüber kann die Auflösung der Direktdruckköpfe ermittelt werden.

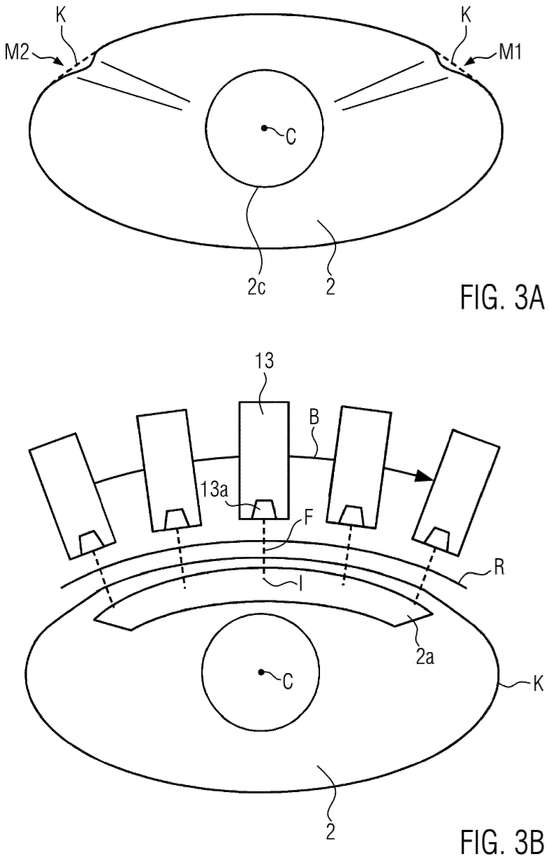

Die 3D-Daten der Behälter 2, die Druckbewegungsbahn und die Druckparameter der Direktdruckmaschine werden dann im Verfahrensschritt 101 zu dem 3D-Druckmodell so geometrisch zusammengesetzt, dass damit eine Abbildungsfunktion der Druckgrafikvorlage bzw. eines entsprechenden Rasterbilds auf die Oberflächenkontur des Behälters 2 beschrieben wird. Dies wird weiter unten anhand der Figuren 3A - 3B näher erläutert.

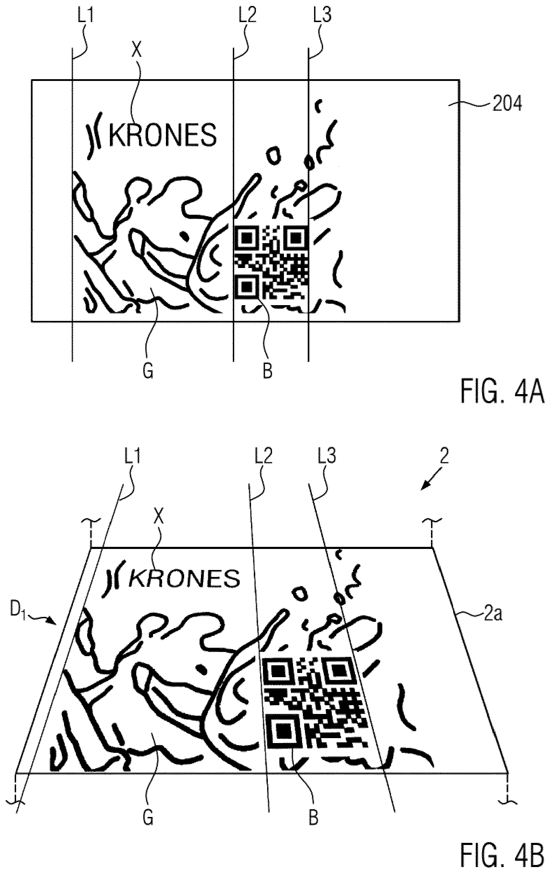

Anschließend wird im Verfahrensschritt 102 die makroskopische Korrektur 202 bestimmt, die die Verzerrung 102a und die Farbdichte 102b umfasst. Die Verzerrung 102b erfasst, wie sich die geometrischen Proportionen der Druckgrafikvorlage beim Drucken als Direktdruck auf die Oberflächenkontur des Behälters 2 abbilden. Beispielsweise werden die parallelen Linien eines Barcodes beim Druck auf eine gegenüber dem Direktdruckkopf schräge Fläche fächerähnlich abgebildet. Darüber hinaus wird, durch die Verzerrung 102a bedingt, die effektive Auflösung der Druckpunkte am Behälter 2 variiert. Dadurch verändert sich dann auch die Anzahl der Farbpunkte pro Fläche, was einer entsprechenden Veränderung der Farbdichte 102b gleichkommt. Durch eine entsprechend inverse Abbildungsfunktion wird aus der Verzerrung 102a und der Farbdichte 102b die makroskopische Korrektur 202 gebildet. Dies wird weiter unten anhand der Figuren 4A - 4D näher erläutert.

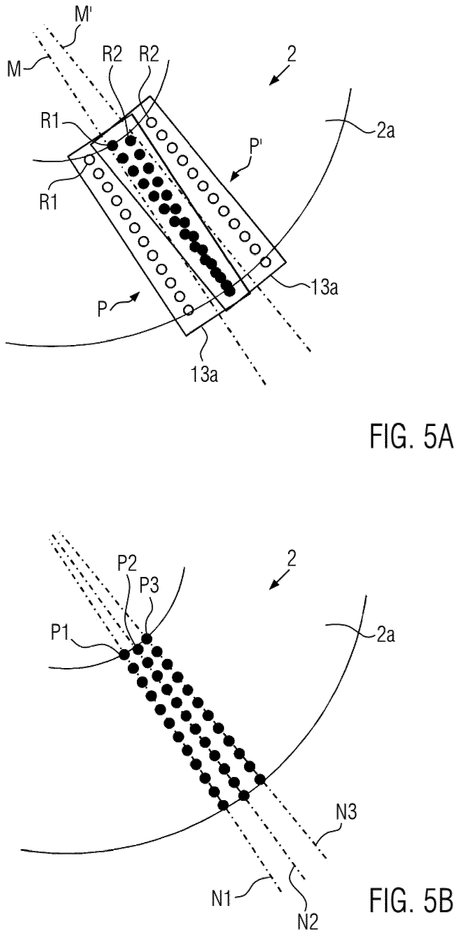

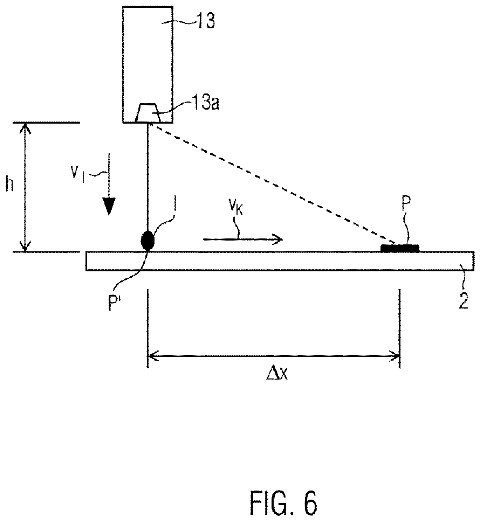

Darauf folgend wird im Verfahrensschritt 103 die mikroskopische Korrektur 202 bestimmt. Sie umfasst die Düsenkorrektur 103a mit der Korrektur der lokalen Druckauflösung 103b und die Flugzeitkorrektur der Drucktropfen 103c. Die Korrektur der lokalen Druckauflösung 103b wird weiter unten anhand der Figuren 5A - 5B und die Flugzeitkorrektur 103c anhand der Figur 6 näher erläutert.

Anschließend werden die makroskopische Korrektur 202 und die mikroskopische Korrektur 203 als Datensätze im Verfahrensschritt 104 im Speicher abgelegt oder als Datei ausgegeben.

In dem Verfahrensschritt 105 wird dann die Druckgrafikvorlage 204 eingelesen. Die Druckgrafikvorlage 204 ist hier beispielsweise eine Grafik im PDF-Format, die auf die Behälter 2 als Direktdruck aufgedruckt werden soll.

Die Druckgrafikvorlage 204 wird im Verfahrensschritt 106 mittels der makroskopischen Korrektur 202 korrigiert, also invers verzerrt und in der korrigierten Druckgrafik 105 abgelegt, so dass die zuvor bestimmte Verzerrung 102a und die Veränderungen der Farbdichte 102b kompensiert werden. Dies wird ebenfalls weiter unten anhand der Figuren 4A - 4D näher erläutert.

Anschließend wird die korrigierte Druckgrafik 105 mit dem an sich bekannten Rasterbildprozessor 107 als Druckrasterbild 206 gerastert. Im Druckrasterbild 206 sind die einzelnen Farben als Druckpunkte gerastert. Beispielsweise haben die Druckpunkte lokal jeweils unterschiedliche Distanzen zueinander, um die gewünschte Farbdichte zu halten.

Nach dem Rasterbildprozessor 107 wird auf das Druckrasterbild 206 die mikroskopische Korrektur 203 angewendet (Schritt 108). Dadurch werden einzelne Druckpunkte des Druckrasterbilds so verschoben, dass die Änderungen der lokalen Druckauflösung 103b und die Flugzeiten der Drucktropfen 103c kompensiert werden. Dies wird ebenfalls weiter unten anhand der Figuren 5A - 5B bzw. 6 näher erläutert.

Nachfolgend wird das korrigierte Druckrasterbild 207 im Verfahrensschritt 109 mit der Direktdruckmaschine 10 an den einzelnen Druckstationen 13_{W}, 13_{C}, 13_{M}, 13_{Y}, 13_{K} durch die Direktdruckköpfe auf die Behälter 2 aufgedruckt.

In den Figuren 3A - 3B ist beispielhaft die Durchführung des Verfahrensschritts 101 zur Erstellung des 3D-Druckmodells anhand des Behälters 2, der hier als Formbehälter ausgebildet ist, genauer dargestellt.

In der Figur 3 A sind die 3 D-Daten des Behälters 2 axial von oben gezeigt. Zu sehen ist, dass der Behälter 2 eine Behälterlängsachse C aufweist, die zentral durch die Behältermündung 2c verläuft. Darüber hinaus ist zu sehen, dass der Behälter 2 einen im Wesentlichen ovalen Querschnitt aufweist, der lediglich durch zwei Mulden M1 und M2 lokal unterbrochen wird. Da im Bereich der Mulden M1, M2 die Drucktropfen sehr flach auf die Behälteroberfläche auftreffen, wird zunächst eine Oberflächenkontur K bestimmt, die auf die 3D-Daten des Behälters 2 als konvexe Hülle virtuell aufgeschrumpft wird. Dadurch werden die Mulden M1, M2 in der Oberflächenkontur K entsprechend geglättet (gestrichelt dargestellt). Alle übrigen Bereiche der Oberflächenkontur K fallen mit 3D-Punkten der 3Daten des Behälters 2 zusammen.

In der Figur 3B ist die Direktdruckstation 13 mit wenigstens einem Direktdruckkopf 13a zu sehen, der beim Drucken relativ zum Behälter 2 entlang der Druckbewegungsbahn B bewegt wird. Die hier dargestellte Druckstation 13 kann eine beliebige der in der Figur 1 dargestellte Druckstationen 13_{W}, 13_{C}, 13_{M}, 13_{Y}, 13_{K} sein. Beispielhaft ist dazu in der Figur 3B die Druckstation 13 an mehreren Positionen entlang der Druckbewegungsbahn B gezeigt. Um die Druckbewegungsbahn B festzulegen, werden die Bewegung des in der Figur 1 dargestellten Karussells 11 und der Behälteraufnahme 12 so kombiniert, dass aus Sicht eines virtuell stationären Behälters 2 die Bewegung der Druckstation 13 ermittelt wird.

Darüber hinaus ist die Oberflächenkontur K des Behälters 2 zu sehen. Daran angegliedert ist der Druckbereich 2 a, der beispielsweise von einem Designer vorab festgelegt wird. Beispielsweise kann die Oberflächenkontur K mit entsprechenden Attributen versehen werden, die den Druckbereich 2a festlegen.

Bei der Bestimmung des 3D-Druckmodells wird aus der Druckbewegungsbahn B der Druckmaschine 10 und damit des Direktdruckkopfs 13a gegenüber der Oberflächenkontur K und aus den Druckparametern der Direktdruckmaschine 10 eine Abbildungsfunktion ermittelt wird, mit der Bildpunkte der Druckgrafikvorlage 204 mit der Oberflächenkontur K korreliert werden. Beispielsweise wird mit der Druckbewegungsbahn B eine Simulation durchgeführt, zu welchem Zeitpunkt sich der Direktdruckkopf 13a an einer bestimmten Stelle der Druckbewegungsbahn B befindet. Zudem wird aus der Druckgrafikvorlage 204 berechnet, zu welchen Zeitpunkten die Düsen des Direktdruckkopfs 13a ausgelöst werden, um die entsprechenden Druckpunkte der Druckgrafikvorlage 204 zu drucken. Über die Flugbahn und Flugzeit kann weiter berechnet werden, wo genau der jeweilige Druckpunkt auf der Oberflächenkontur K gedruckt wird (vgl. Fig. 6). Über die Zeitkorrelation und die Flugbahn kann diese Informationen dann verknüpft und die Abbildungsfunktion ermittelt werden.

Des Weiteren ist es mit der Abbildungsfunktion möglich, aus der Abbildungsfunktion die Verzerrung der Druckgrafikvorlage 204 auf dem Behältern 2 zu ermitteln und damit die makroskopische Verzerrung 202 zu bestimmen.

Zudem kann aus dem so bestimmten 3D-Druckmodell ein mit der Druckgrafikvorlage 204 korreliertes Höhenprofil erstellt werden, das für jeden Bildpunkt der Druckgrafikvorlage 204 den Abstand des Direktdruckkopfs 13a zur Oberflächenkontur K entlang der Flugbahn F enthält. Dadurch ist es möglich, die Flugzeitkorrektur 103c gemäß der Figur 6 durchzuführen und einem Designer eine Höheninformation über die Oberflächentopologie des Behälters 2 gegenüber der Druckgrafikvorlage 204 und/oder 205 bereit zu stellen. Folglich kann sich der Designer beim Überarbeiten der korrigierten Druckgrafik 205 einfacher orientieren.

Eine weitere oder zusätzliche Möglichkeit ist eine Projektion mittels der Referenzflächenkontur R, die in einem konstanten Abstand zu den Positionen des Direktdruckkopfs 13a angeordnet ist. Die Referenzflächenkontur R umschließt die Oberflächenkontur K teilweise und ist eine einfach gekrümmte Fläche, die parallel zu der Behälterlängsachse C verläuft. Zudem verläuft sie auch senkrecht zu den Flugbahnen F der Tintentropfen I. Folglich gibt es an der Referenzflächenkontur R eine Zuordnung zwischen den von einer Druckdüse ausgestoßenen Tintentropfen I und einem Auftreffort im Druckbereich 2a am Behälter 2. Anders ausgedrückt werden Bildpunkte der Referenzflächenkontur R durch eine Projektion mittels der Drucktropfen ! entlang der Flugbahn F auf die Oberflächenkontur K des Behälters 2 abgebildet. Dadurch kann ebenfalls die Abbildungsfunktion bestimmt werden, mit der ein Bildpunkt der Referenzflächenkontur R auf die Oberflächenkontur K des Behälters 2 abgebildet wird.

Des Weiteren ist bekannt, zu welchem Zeitpunkt bei der Bewegung entlang der Druckbewegungsbahn B mit einer bestimmten Düse des Direktdruckkopfs 13a ein Tintentropfen I ausgestoßen wird, sodass er einen bestimmten Bildpunkt der Referenzflächenkontur R durchläuft. Dadurch ist eine entsprechende Ansteuerung der Druckstation 13 möglich, so dass ein gewünschtes Druckrasterbild auf den Druckbereich 2a gedruckt wird.

Dadurch, dass die Referenzflächenkontur R eine einfach gekrümmte Fläche ist, kann sie in einfacher Art und Weise auf die Druckgrafikvorlage 204 abgewickelt werden. Folglich kann also jedem Bildpunkt der Druckgrafikvorlage 204 ein Bildpunkt der Referenzflächenkontur R zugeordnet werden. Durch diese Zuordnung der Druckgrafikvorlage 204 auf die Referenzflächenkontur R und die Abbildungsfunktion der Referenzflächenkontur R auf die Oberflächenkontur K kann ein Bildpunkt der Druckgrafikvorlage 204 dann einem entsprechenden Punkt auf der Oberflächenkontur K des Behälters 2 zugeordnet werden.

In den Figuren 4A - 4D ist die beispielhafte Durchführung der Verfahrensschritte 102 und 106 zur makroskopischen Korrektur 202 der Druckgrafikvorlage 204 dargestellt.

In der Figur 4A ist die Druckgrafikvorlage 204 mit der Grafik G, dem Barcode B und dem Text X zu sehen. Bei der Druckgrafikvorlage 204 handelt es sich beispielsweise um eine PDF-Datei, die von einem Designer erstellt wurde. Zu sehen ist auch, dass sich die Grafik G, der Barcode B und der Text X an den parallelen Linien L1, L2 und L3 ausrichten.

In der Figur 4B ist beispielhaft gezeigt, wie die in der Figur 4A dargestellte Druckgrafikvorlage 204 auf einen konischen Bereich des Behälters 2 ohne Korrektur als Direktdruck D₁ abgebildet werden würde. Zu sehen ist, dass die Linien L 1, L2, und L3 am Druckbereich 2a nicht mehr parallel zueinander verlaufen, sondern entlang der konischen Form des Behälters 2 aufeinander zu laufen. Infolgedessen werden auch die Grafik G, der Barcode B und der Text X verzerrt abgebildet. Dies ist so nicht gewünscht und wird daher mit dem Direktdruckverfahren 100 korrigiert.

Auf Basis des nach den Figuren 3A, 3B und dem Verfahrensschritt 101 erstellten 3-D-Druckmodells wird zunächst die Verzerrung 102a der makroskopischen Korrektur 202 bestimmt. Durch die mit dem 3D-Druckmodell bestimmten Abbildungsfunktion, bei der die Bildpunkte der Referenzflächenkontur R auf entsprechende Punkte der Oberflächenkontur K abgebildet werden, wird analysiert, wie ein regelmäßiges Raster auf dem Behälter 2 beim Druck abgebildet wird. Dadurch ergibt sich entsprechend den in der Figur 4B abgebildeten Linien L1, L2, L3 eine Veränderung der Proportionen.

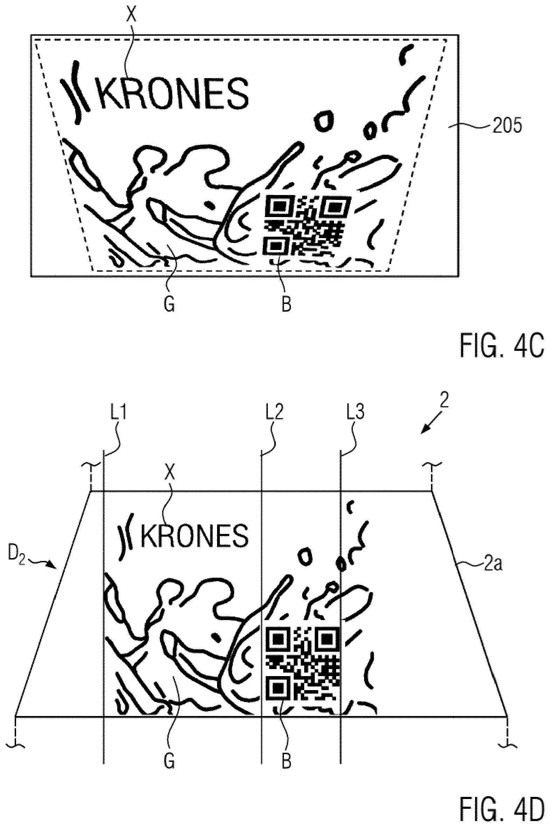

Durch eine entsprechend inverse der Verzerrung 102a kann die Veränderung der Proportionen entsprechend kompensiert werden. Dies ist in der Figur 4C genauer als korrigierte Druckgrafik 205 dargestellt. Die in der Figur 4A dargestellte Druckgrafikvorlage 204 wurde hier auf Basis der makroskopischen Korrektur 202 und der darin enthaltenen inversen der Verzerrung 102a gegenläufig zur Abbildung in der Figur 4B verzerrt. Zu sehen ist also, dass die Grafik G, der Barcode B und der Text X entsprechend umgekehrt zu Figur 4B verzerrt sind.

Darüber hinaus wird aufgrund der Abbildungsfunktion auch eine Änderung der Farbdichte 102b aufgrund näher zusammenliegender bzw. weiter auseinanderliegender Druckpunkte analysiert. Dies kann ebenfalls durch eine Inverse der Änderung der Farbdichte 102b in der korrigierten Druckgrafikvorlage 205 berücksichtigt werden, so dass im Direktdruck D₂ dann die Farben wieder korrekt erscheinen.

Wird nun die korrigierte Druckgrafik 205 mit dem Rasterbildprozessor 107 gerastert und als Direktdruck D₂ auf den Behälter 2 im Druckbereich 2a gedruckt, so erscheint dann die Grafik G, der Barcode B und der Text X entsprechend der Proportionen in der Druckgrafikvorlage 204. Dies ist in der Figur 4D genauer dargestellt. Die Linien L1, L2 und L3 werden hier auf dem Behälter 2 wieder parallel zueinander abgebildet und folglich werden auch die Konturen der Grafik G, die Rasterung des Barcode B und die Buchstaben des Texts X im Direktdruck D₂ unverzerrt gegenüber der Druckgrafikvorlage 204 abgebildet.

In den Figuren 5A - 5B ist die beispielhafte Durchführung der Verfahrensschritte 103b, 108 zur mikroskopischen Korrektur 203 der lokalen Druckauflösung gezeigt.

In der Figur 5A ist der konische Teil des Behälters 2 mit dem Druckbereich 2a in einer Teilansicht genauer dargestellt. Zudem ist zu sehen, wie der Direktdruckkopf 13a an zwei beispielhaften Druckpositionen P, P' gegenüber dem Druckbereich 2a positioniert ist.

An der ersten Druckposition P sind zwei parallele Düsenreihen R1 und R2 des Direktdruckkopfs 13a gezeigt, wobei gerade die Düsenreihe R2 aktiviert ist, um entsprechende Druckpunkte zu erzeugen. Zu sehen ist auch, dass an der ersten Druckposition P die Druckpunkte der Düsenreihe R2 parallel zur Mittellinie M des Direktdruckkopfs 13 verlaufen.

Ferner ist der Direktdruckkopf 13a überlagert an der zweiten Druckpositionen P' gezeigt, wobei hier dieselben Düsenreihen R1, R2 gezeigt sind. Um dieselbe Linie zu drucken, sind hier gerade die Druckdüsen der Düsenreihe R1 aktiviert. Aufgrund der Bewegung des Direktdruckkopfs 13a zur zweiten Druckpositionen P' hin, ergibt sich nun eine versetzte Mittellinie M', zu der die Düsenreihe R 1 parallel verläuft. Da der Direktdruckkopf 13a entlang des konischen Teils des Behälters 2 geführt wird, verläuft die versetzte Mittellinie M' schräg zur Mittellinie M.

Dies bewirkt, wie in der Figur 5A zu sehen, dass die Druckpunkte der Düsenreihen R1 und R2 auseinanderlaufen und ein Geisterbild mit einer zweiten Linie zu erkennen ist, was nicht gewünscht ist.

Entsprechend wird die Rasterung der Druckpunkte in der Figur 5B mit der Korrektur der lokalen Druckauflösung 103b so korrigiert, dass die Druckpunkte am Behälter 2 entlang der auseinanderlaufenden Linien N1, N2, N3 gesetzt werden. Das genaue Raster der Linien N1, N2, N3 kann durch die Verzerrung 102a mitbestimmt werden. Folglich erscheint dann eine Linie nicht mehr doppelt, sondern als einzelne Linie, wodurch die Qualität des Direktdrucks verbessert wird.

In der Figur 6 ist die beispielhafte Durchführung der Verfahrensschritte 103c, 108 zur Flugzeitkorrektur der Drucktropfen dargestellt.

Zu sehen ist ein Querschnitt durch einen Oberflächenbereich des Behälters 2, der gerade bei der Druckposition P von der Druckstation 13 mit einem Druckpunkt bedruckt werden soll. Allerdings bewegt sich einerseits der Behälter 2 gegenüber dem Direktdruckkopf 13a mit der Geschwindigkeit V_{K} und andererseits muss der Drucktropfen I nach dem Abfeuern mit der Geschwindigkeit v_{I} erst den Druckabstand h überwinden. Folglich trifft der Drucktropfen I tatsächlich an der eigentlichen Druckposition P' mit dem Versatz Δx gegenüber der Druckposition P auf. Dadurch ergeben sich entsprechende Verschiebungen des Direktdrucks gegenüber dem Behälter 2, die abhängig vom Druckabstand h und damit von der Oberflächentopologie sind.

Dieser Versatz kann durch die Flugzeitkorrektur der Drucktropfen 103c entsprechend kompensiert werden. Beispielsweise werden mit der mikroskopischen Korrektur 203 die einzelnen Druckpunkte des Druckrasterbilds 206 jeweils individuell so entgegen der Bewegung des Behälters 2 verschoben, dass sie an der gewünschten Druckposition P auftreffen.

Folglich werden die in der Figur 5A durch die Oberflächentopologie bedingten lokalen Auflösungsveränderungen und die in der Figur 6 durch die Flugzeit bedingte Verschiebungen der Druckpunkte mit der mikroskopischen Korrektur 103 korrigiert und im korrigierten Druckrasterbild 207 abgelegt. Der Direktdruck erscheint dann am Behälter gegenüber der Oberflächentopologie so, dass die gerasterten Druckpunkte möglichst am beabsichtigten Ort liegen.

Dadurch, dass die makroskopische Korrektur 202 vor dem Rasterbildprozessor 107 durchgeführt wird, kann die Druckgrafikvorlage 204 mit hoher Auflösung und dennoch mit geringerer Rechenleistung korrigiert werden. Da die Düsenkorrektur 103a für lokale Auflösungseffekte und die Flugzeit erst nach dem Rasterbildprozessor 107 erfolgt, können bei der mikroskopischen Korrektur 203 makroskopische Effekte vernachlässigt werden, so dass die gerasterten Druckpunkte nur noch mikroskopisch verschoben werden, ohne dass dadurch die Qualität des Direktdrucks vermindert wird. Folglich wird dafür nur die tatsächlich notwendige Rechenleistung eingesetzt, wodurch das Direktdruckverfahren 100 besonders effizient arbeitet.

## Patentansprüche

1. Direktdruckverfahren (100) für eine Direktdruckmaschine (10) zur Bedruckung von Behältern (2), insbesondere Formbehälter, mit einem Direktdruck (D₂), wobei die Formbehälter von einer Rotationssymmetrie um eine Behälterlängsachse (C) abweichen,
wobei die Behälter (2) mit einem Transporteur (11) zu wenigstens einer Druckstation (13) mit jeweils wenigstens einem Direktdruckkopf (13a) transportiert werden,
**dadurch gekennzeichnet, dass** aus 3D-Daten der Behälter (2), einer Druckbewegungsbahn (B) der Direktdruckmaschine (10) und aus Druckparametern der Direktdruckmaschine (10) ein 3D-Druckmodell erstellt wird (101), um eine Abbildung einer zu druckenden Druckgrafikvorlage (204) auf die Behälter (2) als Direktdruck vorherzusagen, wobei die 3D-Daten einen digitalen Datensatz umfassen, der eine Geometrie eines zu bedruckenden Behälters (2) beschreibt, wobei die Druckbewegungsbahn (B) der Direktdruckmaschine (10) eine Relativbewegung zwischen dem zu bedruckenden Behälter (2) und dem wenigstens einen Direktdruckkopf (13a) umfasst,
wobei mittels des 3D-Druckmodells eine makroskopische Korrektur (202) und eine mikroskopische Korrektur (203) bestimmt werden (102, 103), wobei die makroskopische Korrektur (202) eine Inverse einer Verzerrung der Druckgrafikvorlage (204) auf den Behältern (2) und die mikroskopische Korrektur (203) eine Düsenkorrektur (103a) umfassen, wobei die Druckgrafikvorlage (204) mit der makroskopischen Korrektur (202) korrigiert und in einer korrigierten Druckgrafik (205) abgelegt wird (106),
wobei mit einem Rasterbildprozessor aus der korrigierten Druckgrafik (205) ein Druckrasterbild (206) erzeugt wird (107), und
wobei das Druckrasterbild (206) auf Basis der mikroskopischen Korrektur (203) korrigiert und als korrigiertes Druckrasterbild (207) abgelegt (108) und mit der Direktruckmaschine (10) als der Direktdruck (D₂) auf die Behälter (2) gedruckt wird (109).

2. Direktdruckverfahren (100) nach Anspruch 1, wobei die makroskopische Korrektur (202) eine durch eine Abbildung der Druckgrafikvorlage (204) hervorgerufene Verzerrung (102a) und/oder eine Änderung der Farbdichte (102b) des Direktdrucks (D₂) an den Behältern (2) korrigiert.

3. Direktdruckverfahren (100) nach Anspruch 1 oder 2, wobei die Düsenkorrektur (103a) eine Korrektur einer lokalen Druckauflösung (103b) umfasst, mit der Auflösungsveränderungen durch zu wenigstens einem Direktdruckkopf (13a) schräg und/oder gekrümmt verlaufende Behälterbereiche (2a) berücksichtigt werden.

4. Direktdruckverfahren (100) nach einem der Ansprüche 1 - 3, wobei die Düsenkorrektur (103a) eine Flugzeitkorrektur (103c) von Drucktropfen (P) umfasst, bei der individuelle Flugzeiten der Drucktropfen (I) aus Düsen (13b) von wenigstens einem Direktdruckkopf (13a) berücksichtigt werden.

5. Direktdruckverfahren (100) nach einem der Ansprüche 1 - 4, wobei bei der Bestimmung des 3D-Druckmodells aus den 3D-Daten der Behälter (2) eine Oberflächenkontur (K) bestimmt wird, und wobei aus der Druckbewegungsbahn (B) der Direktdruckmaschine (10) gegenüber der Oberflächenkontur (K) und aus den Druckparametern der Direktdruckmaschine (10) eine Abbildungsfunktion ermittelt wird, mit der Bildpunkte der Druckgrafikvorlage (204) mit der Oberflächenkontur (K) korreliert werden.

6. Direktdruckverfahren (100) nach Anspruch 5, wobei aus der Abbildungsfunktion die Verzerrung der Druckgrafikvorlage (204) auf den Behältern (2) ermittelt wird.

7. Direktdruckverfahren (100) nach Anspruch 5 oder 6, wobei aus dem 3D-Druckmodell ein mit der Druckgrafikvorlage (204) korreliertes Höhenprofil erstellt wird.

8. Direktdruckverfahren (100) nach einem der Ansprüche 5 - 7, wobei aus der Druckbewegungsbahn (B) der Direktdruckmaschine (10) eine die Oberflächenkontur (K) wenigstens teilweise umschließende Referenzflächenkontur (R) bestimmt wird, und wobei die Verzerrung der Druckgrafikvorlage (204) auf den Behältern (2) durch eine Projektion von der Referenzflächenkontur (R) auf die Oberflächenkontur (K) ermittelt wird.

9. Direktdruckverfahren (100) nach einem der Ansprüche 5 - 8, wobei bei der Bestimmung der Oberflächenkontur (K) die 3D-Daten der Behälter (2) durch einen räumlichen Glättungsfilter gefiltert und/oder auf die 3D-Daten der Behälter (2) eine konvexe Hülle virtuell aufgeschrumpft wird.

10. Direktdruckverfahren (100) nach einem der Ansprüche 5 - 9, wobei Oberflächenabstände (h) und/oder Oberflächengeschwindigkeiten (v_{K}) der Oberflächenkontur (K) oder der 3D-Daten der Behälter (2) gegenüber dem wenigstens einen Direktdruckkopf (13a) bestimmt werden, insbesondere wobei die Druckbewegungsbahn (B) der Direktdruckmaschine (10) berücksichtigt wird, um beim Drucken eine virtuelle Bewegung der Oberflächenkontur (K) gegenüber dem wenigstens einen Direktdruckkopf (13a) zu bestimmen.

11. Direktdruckverfahren (100) nach Anspruch 10, wobei mit den Oberflächengeschwindigkeiten (v_{K}) Variationen der Oberflächenabstände (h) korrigiert werden.

12. Computerprogrammprodukt mit von einem Computersystem (20) ausführbaren Maschineninstruktionen, die beim Ausführen das Computersystem (20) dazu veranlassen, das Direktdruckverfahren (100) nach einem der Ansprüche 1 - 11 durchzuführen.

13. Direktdruckmaschine (10) zur Bedruckung von Behältern (2) mit einem Direktdruck (D₂),
wobei die Direktdruckmaschine (10) wenigstens eine Druckstation (13) mit wenigstens einem Direktdruckkopf (13a), einen Transporteur (11) zum Transport der Behälter (2) zu der wenigstens einen Druckstation (13) und eine Computereinheit (20) umfasst,
wobei die Computersystem(20) eine Prozessoreinheit, eine Speichereinheit, eine Eingabeeinheit (23, 24) und eine Ausgabeeinheit (22) umfasst,
wobei das Computersystem (20) dazu ausgebildet ist, das Direktdruckverfahren (100) nach einem der Ansprüche 1 - 11 durchzuführen.

## Claims

1. Direct printing method (100) for a direct printing machine (10) for printing on containers (2), in particular form containers, with a direct print (D₂), wherein the form containers differ from a rotation symmetry about a container longitudinal axis (C), wherein the containers (2) are transported with a transporter (11) to at least one printing station (13) each with at least one direct printing head (13a),
**characterized in that,**
from 3D data of the containers (2), a print movement path (B) of the direct printing machine (10) and from print parameters of the direct printing machine (10) a 3D print model is generated (101), to predict an image of a print graphic template (204) to be printed on the containers (2) as a direct print, wherein the 3D data comprise a digital data set, which describes a geometry of a container (2) to be printed, wherein the print movement path (B) of the direct printing machine (10) comprises a relative movement between the container (2) to be printed and the at least one direct printing head (13a),
wherein by means of the 3D print model a macroscopic correction (202) and a microscopic correction (203) are determined (102, 103), wherein the macroscopic correction (202) comprises an inverse of a distortion of the print graphic template (204) on the containers (2) and the microscopic correction (203) a nozzle correction (103a), wherein the print graphic template (204) is corrected with the macroscopic correction (202) and stored (106) in a corrected print graphic (205),
wherein by means of a raster image processor a print raster image (206) is generated (107) from the corrected print graphic (205), and
wherein the print raster image (206) is corrected based on the microscopic correction (203) and stored (108) as corrected print raster image (207) and printed (109) as the direct print (D₂) with the direct printing machine (10) on the containers (2).

2. Direct printing method (100) according to claim 1, wherein the macroscopic correction (202) corrects a distortion (102a) caused by an image of the print graphic template (204) and/or a change in the color density (102b) of the direct print (D₂) on the containers (2).

3. Direct printing method (100) according to claim 1 or 2, wherein the nozzle correction (103a) comprises a correction of a local print resolution (103b), with which resolution changes due to container regions running slanted and/or bended (2a) to at least one direct printing head (13a) are taken into account.

4. Direct printing method (100) according to one of claims 1-3, wherein the nozzle correction (103a) comprises a flight time correction (103c) of printing drops (P), where individual flight times of the printing drops (I) of nozzles (13b) of at least one direct printing head (13a) are taken into account.

5. Direct printing method (100) according to one of claims 1 - 4, wherein during the determination of the 3D print model from the 3D data of the containers (2) a surface contour (K) is determined, and wherein from the print movement path (B) of the direct printing machine (10) with respect to the surface contour (K) and from the print parameters of the direct printing machine (10) an image function is determined, with which pixels of the print graphic template (204) are correlated with the surface contour (K).

6. Direct printing method (100) according to claim 5, wherein from the image function the distortion of the print graphic template (204) on the containers (2) is determined.

7. Direct printing method (100) according to claim 5 or 6, wherein from the 3D print model a height profile correlated with the print graphic template (204) is generated.

8. Direct printing method (100) according to one of claims 5-7, wherein from the print movement path (B) of the direct printing machine (10) a reference area contour (R) that at least partially encloses the surface contour (K) is determined, and wherein the distortion of the print graphic template (204) on the containers (2) is determined by a projection from the reference area contour (R) onto the surface contour (K).

9. Direct printing method (100) according to one of claims 5-8, wherein during the determination of the surface contour (K) the 3D data of the containers (2) are filtered by a spatial smoothing filter and/or a convex envelope is virtually shrunk on the 3D data of the containers (2).

10. Direct printing method (100) according to one of claims 5 - 9, wherein surface distances (h) and/or surface velocities (vₖ) of the surface contour (K) or the 3D data of the containers (2) are determined with respect to the at least one direct printing head (13a), wherein in particular the print movement path (B) of the direct printing machine (10) is taken into account to determine during the printing a virtual movement of the surface contour (K) against the at least one direct printing head (13a).

11. Direct printing method (100) according to claim 10, wherein with the surface velocities (vₖ) variations of the surface distances (h) can be corrected.

12. Computer program product with machine instructions executable by a computing system (20), which when executed cause the computing system (20) to perform the direct printing method (100) according to one of claims 1-11.

13. Direct printing machine (10) for printing on containers (2) with a direct print (D₂), wherein the direct printing machine (10) comprises at least one printing station (13) with at least one direct printing head (13a), a transporter (11) for transporting the containers (2) to the at least one printing station (13) and a computing unit (20),
wherein the computing system (20) comprises a processor unit, a storage unit, an input unit (23, 24) and an output unit (22),
wherein the computing system (20) is configured to perform the direct printing method (100) according to one of claims 1-11.

## Revendications

1. Procédé d'impression directe (100) pour une machine d'impression directe (10) permettant d'imprimer des récipients (2), en particulier des récipients moulés, au moyen d'une impression directe (D₂), dans lequel les récipients moulés s'écartent d'une symétrie de rotation autour d'un axe longitudinal de récipient (C),
dans lequel les récipients (2) sont transportés au moyen d'un transporteur (11) vers au moins un poste d'impression (13) muni de respectivement au moins une tête d'impression directe (13a),
**caractérisé en ce que**
un modèle d'impression 3D est créé (101) à partir de données 3D des récipients (2), d'une trajectoire de déplacement d'impression (B) de la machine d'impression directe (10), et de paramètres d'impression de la machine d'impression directe (10) afin de prédire une représentation d'une maquette graphique d'impression (204) à imprimer sur les récipients (2) sous forme d'impression directe, dans lequel les données 3D comprennent un ensemble de données numériques décrivant une géométrie d'un récipient (2) à imprimer, dans lequel la trajectoire de déplacement d'impression (B) de la machine d'impression directe (10) comprend un déplacement relatif entre le récipient (2) à imprimer et la au moins une tête d'impression directe (13a),
dans lequel une correction macroscopique (202) et une correction microscopique (203) sont déterminées (102, 103) au moyen du modèle d'impression 3D, dans lequel la correction macroscopique (202) comprend une inversion d'une distorsion de la maquette graphique d'impression (204) sur les récipients (2) et la correction microscopique (203) comprend une correction de buse (103a),
dans lequel la maquette graphique d'impression (204) est corrigée au moyen de la correction macroscopique (202) et est consignée (106) dans un graphique d'impression (205) corrigé,
dans lequel une image tramée d'impression (206) est générée (107) au moyen d'un processeur d'image tramée à partir du graphique d'impression (205) corrigé, et
dans lequel l'image tramée d'impression (206) est corrigée en se basant sur la correction microscopique (203) et est consignée (108) sous forme d'image tramée d'impression (207) corrigée et est imprimée (109) sous forme d'impression directe (D₂) sur les récipients (2) au moyen de la machine d'impression directe (10)

2. Procédé d'impression directe (100) selon la revendication 1, dans lequel la correction macroscopique (202) corrige une distorsion (102a) provoquée par une représentation de la maquette graphique d'impression (204) et/ou une modification de la densité de couleur (102b) de l'impression directe (D2) sur les récipients (2).

3. Procédé d'impression directe (100) selon la revendication 1 ou 2, dans lequel la correction de buse (103a) comprend une correction d'une résolution d'impression locale (103b) au moyen de laquelle des modifications de résolution sont prises en compte pour des régions de récipient (2a) s'étendant de manière oblique et/ou courbée par rapport à au moins une tête d'impression directe (13a).

4. Procédé d'impression directe (100) selon l'une quelconque des revendications 1 à 3, dans lequel la correction de buse (103a) comprend une correction de temps de vol (103c) de gouttes d'impression (P) pour laquelle des temps de vol individuels des gouttes d'impression (I) à partir des buses (13b) d'au moins une tête d'impression directe (13a) sont pris en compte.

5. Procédé d'impression directe (100) selon l'une quelconque des revendications 1 à 4, dans lequel, lors de la détermination du modèle d'impression 3D, un contour de surface (K) est déterminé à partir des données 3D du récipient (2), et dans lequel une fonction d'imagerie, au moyen de laquelle des points d'image de la maquette graphique d'impression (204) sont corrélés au contour de surface (K), est déterminée à partir de la trajectoire de déplacement d'impression (B) de la machine d'impression directe (10) par rapport au contour de surface (K) et à partir des paramètres d'impression de la machine d'impression directe (10).

6. Procédé d'impression directe (100) selon la revendication 5, dans lequel la distorsion de la maquette graphique d'impression (204) sur les récipients (2) est déterminée à partir de la fonction d'imagerie.

7. Procédé d'impression directe (100) selon la revendication 5 ou 6, dans lequel un profil de hauteur corrélé avec la maquette graphique d'impression (204) est créé à partir du modèle d'impression 3D.

8. Procédé d'impression directe (100) selon l'une quelconque des revendications 5 à 7, dans lequel un contour de surface de référence (R) entourant au moins partiellement le contour de surface (K) est déterminé à partir de la trajectoire de déplacement d'impression (B) de la machine d'impression directe (10), et dans lequel la distorsion de la maquette graphique d'impression (204) sur les récipients (2) est déterminée grâce à une projection du contour de surface de référence (R) sur le contour de surface (K).

9. Procédé d'impression directe (100) selon l'une quelconque des revendications 5 à 8, dans lequel, lors de la détermination du contour de surface (K), les données 3D des récipients (2) sont filtrées grâce à un filtre de lissage spatial et/ou une enveloppe convexe est virtuellement rapprochée des données 3D des récipients (2).

10. Procédé d'impression directe (100) selon l'une quelconque des revendications 5 à 9, dans lequel des distances de surface (h) et/ou des vitesses de surface (V_{K}) du contour de surface (K) ou des données 3D des récipients (2) sont déterminées par rapport à la au moins une tête d'impression directe (13a), en particulier dans lequel la trajectoire de déplacement d'impression (B) de la machine d'impression directe (10) est prise en compte pour déterminer un déplacement virtuel du contour de surface (K) par rapport à la au moins une tête d'impression directe (13a) lors de l'impression.

11. Procédé d'impression directe (100) selon la revendication 10, dans lequel des variations des distances de surface (h) sont corrigées avec les vitesses de surface (Vk).

12. Produit-programme informatique comprenant des instructions de machine pouvant être exécutées par un système informatique (20) et qui, lors de ladite exécution, permettent au système informatique (20) de mettre en oeuvre le procédé d'impression directe (100) selon l'une quelconque des revendications 1 à 11.

13. Machine d'impression directe (10) permettant une impression de récipients (2) au moyen d'une impression directe (D₂),
dans laquelle la machine d'impression directe (10) comprend au moins un poste d'impression (13) muni d'au moins une tête d'impression directe (13a), un transporteur (11) permettant de transporter les récipients (2) vers le au moins un poste d'impression (13) et une unité informatique (20),
dans laquelle le système informatique (20) comprend une unité de processeur, une unité de mémoire, une unité d'entrée (23, 24) et une unité de sortie (22),
dans laquelle le système informatique (20) est conçu pour mettre en oeuvre le procédé d'impression directe (100) selon l'une quelconque des revendications 1 à 11.
